# FASCICULE DE BREVET EUROPEEN

(11) **EP 0 565 431 B1**
(45) Date de publication et mention de la délivrance du brevet: **11.09.1996**
(21) Numéro de dépôt: 93400889.7
(22) Date de dépôt: 06.04.1993
(51) Int. Cl.: F02P 19/02, F02D 41/06

(54) **Perfectionnements aux moteurs diesel**
Verbesserungen an Dieselbrennkraftmaschinen
Improvements in diesel engines

(30) Priorité: 07.04.1992 FR 9204241
(43) Date de publication de la demande: 13.10.1993
(73) Titulaire: REGIE NATIONALE DES USINES RENAULT S.A., F-92109 Boulogne Billancourt (FR)
(72) Inventeur: Lepretre, Bernard, F-92000 Nanterre (FR); Rousseau, Christian, F-92160 Antony (FR)

(56) Documents cités:
- EP-A- 0 318 350
- DE-A- 4 108 809
- FR-A- 2 476 212
- GB-A- 2 083 553
- GB-A- 2 215 778
- US-A- 4 639 871

## Description

L'invention concerne des perfectionnements aux moteurs Diesel et plus précisément un dispositif d'optimisation de leur fonctionnement.

Dans un moteur Diesel à quatre temps, au cours du premier temps du cycle des opérations, seul de l'air est aspiré dans les cylindres, puis cet air est comprimé au cours du deuxième temps. La température finale de l'air ainsi comprimé est comprise entre 700 et 900°C, en fonction notamment de la température de l'air extérieur et de la température moyenne du cylindre avant l'aspiration d'air frais, cette dernière étant elle-même directement dépendante de la température de l'eau du radiateur. Un peu avant la fin du deuxième temps du cycle ou au tout début du troisième temps, une pompe d'injection pulvérise une certaine quantité de gazole, proportionnelle au régime du moteur, dans la chambre de combustion du cylindre. La durée de cette injection est de quelques millisecondes. Elle varie en fonction du régime et du couple du moteur. Du fait de la température élevée de l'air qui s'y trouve déjà, le gazole s'enflamme spontanément. Toutefois, cette combustion ne se produit pas instantanément au moment de l'arrivée du gazole dans la chambre mais après un intervalle de temps de l'ordre de la milliseconde. Cela, parce que les gouttelettes de gazole pulvérisé, injectées dans la chambre de combustion, doivent tout d'abord se mélanger intimement à l'air chaud et être vaporisées avant de pouvoir s'enflammer.

L'intervalle de temps entre les instants de début d'injection et d'ignition est appelé retard à la combustion.

L'expérience a montré que le processus ci-dessus, malgré sa complexité, se déroule assez correctement lorsque le moteur fonctionne dans sa plage de température de consigne mais qu'il n'en est pas de même en deçà et au-delà de cette plage. Ce qui est le cas au moment du démarrage du moteur (notamment lorsque la température extérieure est très basse, - 30°C par exemple) ou lorsqu'il fonctionne trop longtemps en surcharge ou en sur-régime ou encore lorsque la température extérieure est très élevée, + 50°C par exemple. Par ailleurs, du fait des considérations écologiques mises en avant dans le monde depuis quelques années, et des normes antipollution qui en ont découlé, le fonctionnement d'un moteur Diesel, jugé assez correct, avant cette prise de conscience écologique, ne l'est plus aujourd'hui.

Ces différents problèmes du moteur Diesel sont bien connus des spécialistes et les constructeurs ont cherché à trouver à chacun d'eux une solution aussi satisfaisante que possible. En général, chacune de ces solutions est fondée sur le principe du tout ou rien : en-deçà ou au-delà de telle valeur de tel paramètre, on intervient ou, au contraire, on n'intervient pas ou n'intervient plus. Ce principe impose un nombre de capteurs égal au nombre d'actuateurs, les deux fonctions étant parfois confondues dans un même organe comme dans le cas des thermorelais par exemple. Comme la valeur d'un même paramètre (température de l'air et de l'eau, régime du moteur et charge des cylindres ...) conditionne en fait les valeurs à faire prendre à plusieurs autres .... (température moyenne dans le cylindre, instant d'injection du gazole et sa durée), le principe sur lequel les solutions des problèmes du moteur Diesel ont jusqu'à présent été bâties est pour des raisons pratiques simples, totalement dépassé dès lors que l'on ne se satisfait plus de réglages grossiers. Il est en effet impossible de multiplier par trois, quatre ou davantage, le nombre de capteurs préréglés, tout simplement parce qu'il n'y a pas de place pour eux sur les culasses ou dans les conduits et tuyaux associés au moteur.

L'objet général de l'invention est un dispositif d'optimisation du fonctionnement du moteur Diesel dans lequel les différentes valeurs des paramètres régissant directement la qualité de ce fonctionnement sont déterminées et réglées en fonction de tous les paramètres concernés, externes'ou internes au moteur.

Un premier objet particulier de l'invention est un dispositif d'optimisation du fonctionnement du moteur Diesel qui prend en compte tous les paramètres externes et internes au moteur ayant une influence sur les conditions de démarrage d'un moteur Diesel.

Un deuxième objet particulier de l'invention est un dispositif d'optimisation du fonctionnement du moteur Diesel qui prend en compte tous les paramètres externes et internes au moteur ayant une influence sur les conditions de fonctionnement en sur-régime et/ou en surcharge du moteur.

Un troisième objet particulier de l'invention est un dispositif d'optimisation du fonctionnement du moteur Diesel qui prend en compte tous les paramètres internes et externes au moteur ayant une influence sur les conditions de production de produits prohibés par les normes antipollution.

Selon l'invention, un dispositif d'optimisation du fonctionnement d'un moteur Diesel, équipé d'une pompe d'injection distributrice de gazole, est caractérisé en ce qu'il comprend :
- deux sondes de température de type analogique, respectivement adaptées à mesurer la température de l'eau dans la culasse et celle de l'air dans le collecteur d'admission ;
- au moins un convertisseur analogique-numérique relié auxdites sondes, pour produire deux signaux numériques Θeau et Θair, représentatifs desdites températures ;
- un microprocesseur, opérant sous le contrôle d'un premier logiciel, dit de chauffage, pour élaborer à partir des signaux d'entrée Θeau et Θair, des signaux de sortie représentatifs des commandes à appliquer aux relais d'alimentation des filaments des bougies de chauffage des cylindres du moteur et de celui d'une lampe-témoin ;
- des étages interfaces respectivement déposés en amont et en aval du microprocesseur ;
- ledit logiciel de chauffage étant adapté à faire délivrer par le microprocesseur, à partir du moment où la clé de contact est en place et allume le tableau de bord, des signaux de commande d'actuateurs établissant les situations suivantes :
- les filaments des bougies de tous les cylindres sont alimentés et une lampe-témoin est allumée, pendant une période dite de préchauffage et la durée D₁ de cette période est à titre principal une fonction de la température de l'eau Θeau, ladite fonction prenant une valeur sensiblement constante et voisine d'un maximum lorsque la température Θeau est inférieure à un premier seuil principal de chauffage Θ₁, puis régulièrement décroissante jusqu'à un minimum quand Θeau passe de Θ₁ à un deuxième seuil principal de chauffage Θ₂ et finalement sensiblement égale à ce minimum au-delà de Θ₂ ;
- les durées de la période de préchauffage D₁ sont, à titre complémentaire, corrigées selon deux fonctions linéaires des écarts de la température de l'air Θair par rapport à deux seuils complémentaires de chauffage, successifs Θ₃ et Θ₄, cette correction étant une augmentation de durée en-deçà de Θ₃ et une diminution au-delà de Θ₄ ;
- les filaments des bougies continuent à être alimentés de la même façon après la fin de la période de préchauffage pendant une durée maximale donnée D₂, dite de distraction, comptée à partir de la fin de la période de préchauffage et se terminant à la fin de l'actionnement du démarreur, puis pendant une durée donnée D₃, dite de postchauffage, comptée à partir de l'instant d'actionnement du démarreur.

Grâce à ces dispositions, un moteur Diesel, équipé d'un dispositif d'optimisation de fonctionnement selon l'invention, démarre dans des conditions meilleures que dans le cas - général jusqu'à présent - où le temps de préchauffage des cylindres ne dépend que de la température de l'air à l'entrée du collecteur d'admission.

Des travaux systématiques, portant sur les influences respectives des températures Θeau et Θair sur la qualité du fonctionnement d'un moteur Diesel (et donc sur la durée du préchauffage qu'il convient de retenir pour optimiser ce fonctionnement au moment du démarrage), ont en effet montré qu'un écart δΘ de la température de l'eau par rapport à sa température de consigne avait beaucoup plus d'influence sur'le comportement du moteur qu'un même écart δΘ entre la température de l'air et une valeur de référence. Il en résulte que, selon l'invention, le paramètre principal, à prendre en compte pour optimiser le fonctionnement d'un moteur Diesel au moment du démarrage, est la température de l'eau Θeau, la température de l'air Θair étant seulement retenue à titre de facteur correctif du précédent.

Selon une caractéristique complémentaire de l'invention, le dispositif d'optimisation du fonctionnement d'un moteur Diesel comprend :
- un potentiomètre, lié au levier de commande de la pompe d'injection du moteur, produisant un signal analogique ensuite converti en signal numérique α, représentatif de l'énergie unitaire engendrée à la suite de chaque injection dans chacun des cylindres ;
- un deuxième logiciel dit de postchauffage alterné, adapté à faire élaborer par le microprocesseur des signaux de commande desdits relais d'alimentation aboutissant aux situations suivantes :
- pendant plusieurs minutes après la fin du postchauffage, les filaments des bougies d'un premier et d'un second groupe sont alternativement alimentés à une fréquence de l'ordre d'un demi-Hertz ;
- dès que le signal numérique α est supérieur à une valeur de seuil α₁, pendant une durée donnée généralement inférieure à dix secondes, ou dès que le signal Θeau dépasse un seuil Θ₅, ce postchauffage alterné est interrompu.

Grâce à cette disposition, en complément de l'échauffement des cylindres résultant de l'énergie engendrée en conséquence de chaque injection de gazole dans les chambres de combustion du moteur, une assistance thermique est apportée par ce postchauffage alterné, sans risque de détérioration rapide des filaments des bougies, afin que la température moyenne des cylindres atteigne plus rapidement sa plage de consigne.

Cette approche est interrompue dans deux cas. Tout d'abord, lorsque l'alimentation en gazole du moteur a été suffisante pendant un certain temps pour que cette plage de consigne soit nécessairement très proche. Dans ce cas, il est en effet préférable de ménager les filaments des bougies en arrêtant de les alimenter pendant que des énergies relativement élevées directement proportionnelles aux volumes unitaires de gazole injecté sont engendrées dans les cylindres et provoquant une élévation instantanée importante de la température de l'environnement de ces filaments. Finalement, lorsque la température de l'eau de la culasse a atteint la valeur basse de sa plage de consigne, ce qui signifie qu'il en est de même pour la température moyenne des chambres de combustion. Selon une autre caractéristique de l'invention, le dispositif d'optimisation du fonctionnement d'un moteur Diesel comprend un troisième logiciel dit de surcalage, adapté à faire élaborer par le microprocesseur un signal de commande des actuateurs concernés, aboutissant à la situation suivante :
- un premier actuateur associé à la pompe d'injection provoque un avancement déterminé de l'instant d'injection du gazole, pendant une durée sensiblement constante, au plus égale à quelques dizaines de secondes, lorsque les températures de l'eau et de l'air sont toutes deux respectivement inférieures à deux premiers seuils de surcalage, ladite durée étant reliée auxdites températures par une combinaison de deux relations sensiblement linéaires décroissantes lorsqu'elles sont respectivement comprises entre lesdits premiers seuils et deuxièmes seuils de surcalage, puis sensiblement constante et au moins égale à quelques secondes, lorsqu'elles sont toutes deux supérieures auxdits deuxièmes seuils.

Selon une caractéristique complémentaire de la précédente, un quatrième logiciel dit d'avance faible chargé est prévu qui permet d'aboutir à la situation suivante :
- dès la mise sous tension du démarreur du moteur, une électrovanne associée à la pompe d'injection, tout d'abord provoque un décalage déterminé du point d'injection lorsque la température de l'air Θair est inférieure à un seuil donné et ensuite maintient ce décalage aussi longtemps que la température de l'eau Θeau n'a pas atteint un autre seuil donné.

Grâce à ces dispositions, le point d'avance à l'injection est corrigé en fonction de deux paramètres, l'un externe Θair et l'autre interne Θeau, de manière à optimiser le fonctionnement du moteur au moment de son démarrage, notamment à froid.

Selon une autre caractéristique de l'invention, un capteur de vitesse instantanée de rotation est associé au volant d'inertie du moteur pour fournir un signal numérique représentatif de ladite vitesse, une vanne à ouverture asservie à une valeur-pilote est disposée entre les conduits d'échappement et d'admission du moteur et un cinquième logiciel, dit de recirculation, est associé au microprocesseur, ledit logiciel de recirculation étant adapté à faire élaborer par le microprocesseur un signal de commande .des actuateurs concernés aboutissant à la situation suivante :
- ladite valeur-pilote est à tout moment principalement déterminée par la valeur de la vitesse instantanée de rotation du moteur et par celle de l'énergie unitaire engendrée dans les cylindres représentée par la position du potentiomètre associé au levier de commande de la pompe d'injection en accord avec une cartographie des principales valeur-pilotes en fonction des deux paramètres en question.

Selon une caractéristique complémentaire de la précédente, ledit logiciel de recirculation est en outre adapté à moduler ladite valeur-pilote, fournie par ladite cartographie, en fonction sensiblement linéaire de la température de l'eau, le facteur de modulation étant de l'ordre de 0,10 lorsque la température de l'eau est minimale et égal à l'unité lorsqu'elle atteint sa plage de consigne.

Selon une autre caractéristique complémentaire, le logiciel de recirculation est de plus adapté à faire progressivement varier ladite valeur-pilote entre deux valeurs successives fournies par la cartographie, en accord avec le gradient de vitesse de rotation du moteur.

Grâce à ces dispositions, une partie des gaz d'échappement du moteur est recyclée dans les cylindres, dans des proportions constamment ajustées en fonction de tous les paramètres concernés, de manière à toujours diminuer au mieux le volume d'oxygène disponible, et donc la température instantanée dans le cylindre, pendant la combustion du gazole afin de réduire au maximum la quantité d'oxyde d'azote produite au cours de cette combustion et ainsi de se conformer aux normes antipollution applicables.

Les caractéristiques et avantages de l'invention apparaîtront d'une manière plus précise à la suite de la description ci-après d'une forme schématique de réalisation de l'invention, faite à titre d'exemple non limitatif en référence aux dessins annexés dans lesquels :
- la figure 1 est une représentation symbolique d'un dispositif d'optimisation du fonctionnement d'un moteur Diesel;
- la figure 2 représente le schéma d'un moteur Diesel muni de capteurs et d'actuateurs selon l'invention;
- la figure 3 représente le diagramme de chauffage des bougies du moteur;
- la figure 4 représente une loi de variation d'un temps de chauffage en fonction de la température de l'eau;
- la figure 5 représente la loi de modulation, en fonction de la température de l'eau, de la valeur-pilote de la vanne de recirculation des gaz d'échappement;
- la figure 6 représente une cartographie des relations de ladite valeur-pilote en fonction du régime et de la charge du moteur, et
- la figure 7 représente les domaines de fonctionnement de l'avance à faible charge du moteur.

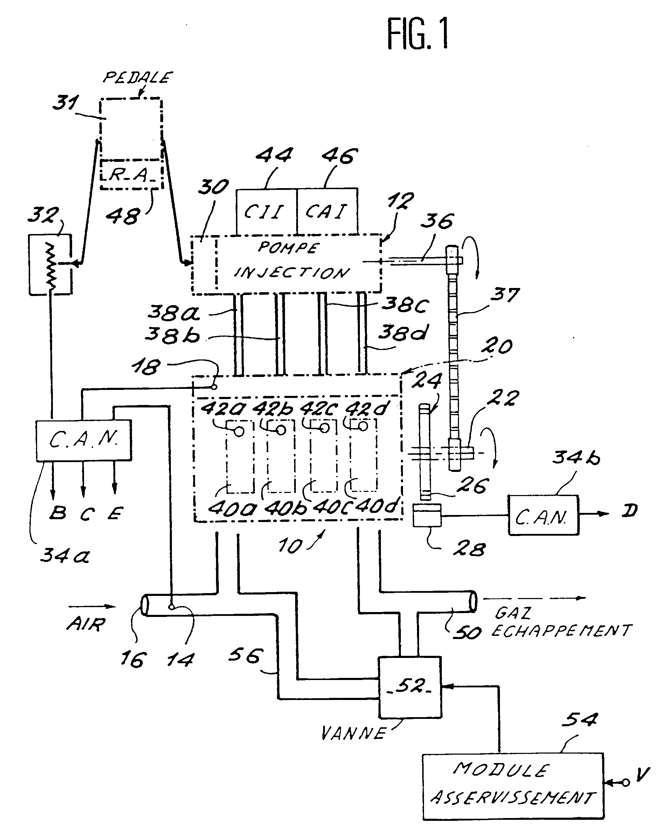

Selon la figure 1, un dispositif d'optimisation du fonctionnement d'un moteur Diesel 10 à quatre cylindres, équipé d'une pompe d'injection distributrice 12, comprend une sonde de température d'air 14, constituée par une résistance CTN, disposée dans le collecteur d'admission 16 du moteur 10 et une sonde de température d'eau 18 du même type, disposée dans l'eau de la culasse 20. Le moteur 10 possède un arbre 22 pourvu d'un volant d'inertie 24 muni de quatre fentes 26 équidistantes les unes des autres. Un capteur à réluctance variable 28 est disposé en face du volant 24. Il est adapté à délivrer quatre impulsions par tour de l'arbre 22.

La pompe d'injection 12 est commandée par un levier de commande 30 lié à la pédale d'accélérateur 31. A cette pédale 31 est associé un potentiomètre 32 qui délivre une tension proportionnelle au volume unitaire de la charge explosive (gazole) introduite dans les cylindres au cours d'une injection.

Les signaux analogiques de sortie des sondes de température 14 et 18 et du potentiomètre 32, toutes appliquées à un convertisseur analogique/numérique 34a, adapté à délivrer en permanence trois signaux numériques B,C,E respectivement représentatifs de la température de l'eau Θeau dans la culasse 20, de celle de l'air Θair à l'entrée du collecteur 16 et de la position α du levier de commande d'injection 30. Le signal E passe d'une valeur minimale (ralenti standard) à une valeur maximale. Le signal analogique de sortie du capteur de vitesse de rotation 28 est appliqué à un convertisseur analogique/numérique 34 qui délivre en permanence un signal numérique D représentatif de cette vitesse.

La pompe d'injection 12 possède un arbre d'entrée 36 entraîné par une courroie crantée 37, à la moitié de la vitesse de l'arbre 22 du moteur D. La position angulaire de l'arbre 36 de la pompe 12 a fait l'objet d'un calage mécanique sur l'arbre à came du moteur à partir du point haut du premier cylindre qui est pris comme référence angulaire. La pompe d'injection distributrice 12 est, par exemple, du type V.E. de la société allemande BOSCH. Elle comporte quatre injecteurs 38 a,b,c,d respectivement connectés aux quatre cylindres 40 a,b,c,d du moteur 10. La pompe d'injection 12 est adaptée à périodiquement injecter dans les cylindres 40 un volume unitaire de gazole, variable en fonction des différents régimes et couples du moteur. La quantité injectée est proportionnelle à la vitesse de rotation du moteur 10. Les instants d'injection, définis par quatre positions angulaires de l'arbre 36, ont une valeur standard et une valeur corrigée en avance sous l'action d'électrovannes 44 dite de Correction de l'Instant d'Injection (C.I.I.). La durée d'injection est déterminée par le calculateur mécanique que comporte la pompe 12, en fonction directe de la position angulaire de la pédale d'accélérateur 30. A la pédale d'accélérateur 31 est de même associé un électro-aimant 48 dit de Ralenti Accéléré, adapté à augmenter d'une quantité donnée la position angulaire du levier de commande 30 d'injection lié à la pédale 31.

En dérivation sur le conduit 50 des gaz d'échappement du moteur 10, est branchée une vanne 52 à commande pneumatique dont-l'ouverture est asservie à un ordre de position délivré par un module d'asservissement 54 recevant en entrée une valeur-pilote V. La sortie de la vanne 52 est reliée par une canalisation 56 à l'entrée du collecteur d'admission d'air 16.

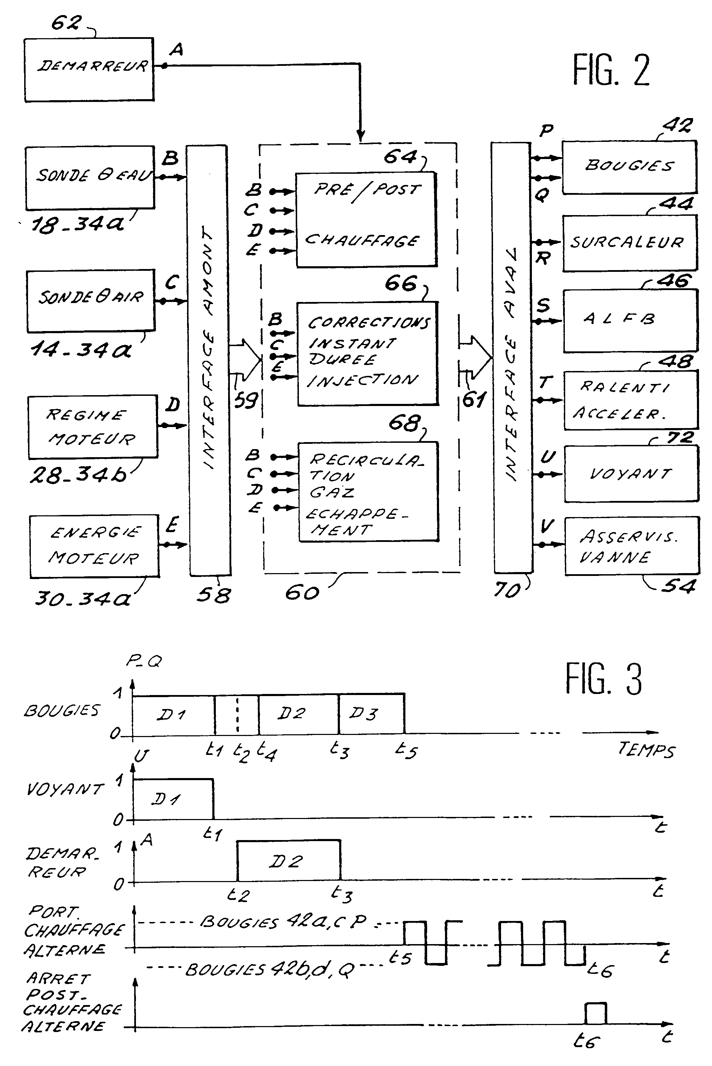

Selon la figure 2, les signaux B,C,D,E fournis par les convertisseurs analogique/numérique 34 a,b sont appliqués à une interface amont 58 reliée par un bus 59 à un microprocesseur 60 recevant par ailleurs une instruction A fournie par le contact d'un démarreur 62. Le microprocesseur 60 opère sous le contrôle de trois logiciels principaux 64,66 et 68.

Le logiciel 64, dit de Pré et Postchauffage, est adapté à faire délivrer par le microprocesseur 60, à partir des quatre signaux numériques A,B,C,E, (c'est-à-dire des températures Θeau et Θair et de la position angulaire du levier de commande d'injection lié à la pédale d'accélération 31, devenues opérationnelles dès l'apparition du signal de démarrage) des premiers signaux numériques de commande, sur un bus 61 connecté à une interface aval 70. Ces premiers signaux numériques de commande sont transformés dans l'interface 70 en trois instructions :

D'une part, P et Q appliquées à des relais électromagnétiques (non représentés) d'alimentation des filaments des bougies 42 a,b,c,d, des cylindres 40 du moteur 10 et, d'autre part, U, appliquée au relais d'alimentation d'un voyant 72.

Les diagrammes des instructions P-Q-U sont représentés à la figure 3. L'instant t=0 de ces diagrammes est l'instant où la clé de contact (non représentée) est mise en place et connecte la batterie (non représentée) associée au moteur, à l'ensemble du dispositif d'optimisation de fonctionnement du moteur, représenté aux figures 1 et 2. A partir de l'instant t=0, le microprocesseur 60, sous le contrôle du logiciel 64, élabore à partir des signaux B et C (températures Θeau et Θair), la durée D₁=(t₁-t₀) du préchauffage des bougies 42.

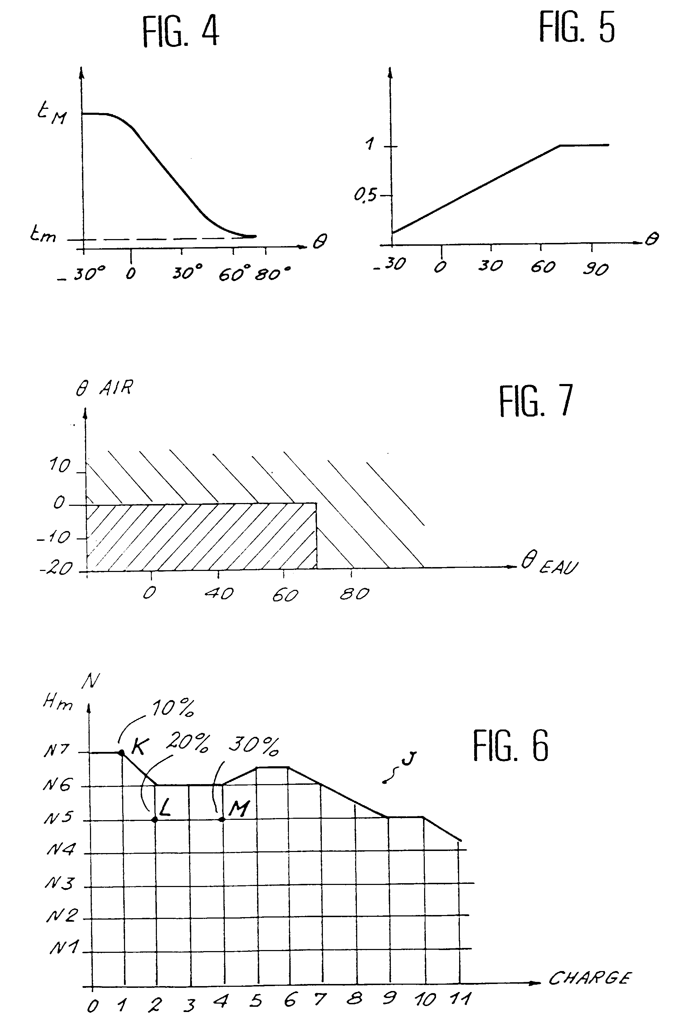

Cette durée D₁ varie de deux à seize secondes environ en fonction d'une loi expérimentale numérique qui est mémorisée dans le logiciel 64 dont la représentation analogique est donnée à la figure 4. Lorsque la température Θeau est comprise entre -30°C et -5°C, la durée D₁ est sensiblement maximale t_{M} et, dans le cas présent proche de vingt secondes.

Pour Θeau comprise entre - 5°C et 50°C, la durée D₁, décroît, d'une manière sensiblement linéaire et pour Θeau située au-delà de 60°C, la durée D₁, tend vers une durée minimale tₘ qui, dans la cas présent est d'environ deux secondes.

Pendant la durée de la période de préchauffage D₁, les ordres P-Q-U sont actifs (état binaire 1) et les filaments des quatre bougies 40 a,b,c,d, sont connectés à la batterie (ordres P-Q), de même que le voyant 72 (ordre U) à travers leurs relais électromagnétiques d'alimentation.

A la fin de cette période D₁, le voyant 72 s'éteint, signalant par là-même au conducteur que le préchauffage de son moteur Diesel est terminé et qu'il peut actionner son démarreur. Pour ce faire, il dispose d'une période, dite de distraction, de durée (t₄-t₁), égale à neuf secondes environ, pendant laquelle le logiciel 64 et le microprocesseur 60 opèrent et continuent, à travers l'interface 70, d'appliquer deux ordres actifs P-Q aux relais d'alimentation des filaments des bougies.

A l'instant t₂, le démarreur 62 est actionné et pendant une période D₂ de durée (t₃-t₂) égale à l'intervalle de temps que met le moteur 10 pour commencer à tourner seul (5 à 10 secondes par exemple), sous l'action du signal A fourni par le démarreur 62, les ordres actifs P-Q sont maintenus et les filaments des bougies sont alimentés.

Dès que le moteur tourne, le conducteur relâche la clé du démarreur 62. C'est l'instant t₃ sur les diagrammes P-Q et A de la figure 3. Sous l'action du logiciel 64, le microprocesseur 60 prolonge la durée des ordres actifs P-Q pendant une période, dite de postchauffage fixe de durée constante D₃= (t₅-t₃)=10 secondes environ. A la fin de cette période D₃ de postchauffage fixe, la température moyenne dans les cylindres 40 a,b,c,d est à peu près suffisante pour qu'à la fin du deuxième temps du cycle du moteur, la température de l'air comprimé ait atteint sa plage de consigne (800 à 850°C, par exemple). Pour augmenter cette température moyenne, le logiciel 64, le microprocesseur 60 et l'interface 70 coopèrent pour adresser alternativement aux relais d'alimentation des filaments des bougies 42a-42c, d'une part, et 42b-42d, d'autre part, des ordres actif P et passif Q puis passif P et actif Q. La fréquence de commutation de ces ordres est de 0,5 Hertz environ et la durée de chaque ordre d'une seconde environ.

A la fin des ordres actif et passif le concernant, les températures d'un filament passent de 850°C à 750°C (environ) et inversement. Grâce à quoi, la température de l'air comprimé, à la fin du deuxième temps du cycle, entre assez rapidement dans sa plage de consigne. La durée maximale de ce postchauffage alterné est de trois minutes par exemple, mais elle est arrêtée avant par le microprocesseur 60, dès que la température de l'eau atteint un seuil donné, 60°C par exemple. En dépit de cette durée relativement longue, les filaments ne se détériorent pas du fait de l'alternance de fonctionnements actif et passif auxquels ils sont soumis.

L'exposé précédent n'a pris en compte que les signaux A et B fournis au microprocesseur 60. En fait, le signal C, représentatif de la température de l'air à l'entrée du collecteur 16 et le signal E, représentatif de la position du levier de commande d'injection (et donc de la charge explosive et de l'énergie engendrée, correspondant à chaque volume unitaire de gazole qui est injecté dans un cylindre au cours d'un cycle) sont également appliqués par l'interface 58 au logiciel 64.

Le signal C (température de l'air) y est comparé à deux seuils respectivement bas et haut (par exemple, - 10°C et + 30°C) et, en réponse, le logiciel 64 fait délivrer par le microprocesseur 60 et appliquer à la durée D₁, de préchauffage précédemment obtenue, des facteurs majorant (1,1 à 1,2 par exemple) ou minorant (0,8 à 0,9 par exemple) lorsque Θair est inférieur au seuil bas, dans le premier cas, et supérieur au seuil haut, dans le second.

Quant au signal E, il est comparé par le microprocesseur 60, opérant sous le contrôle du logiciel 64, à un seuil de consigne E₁. Au cas où E serait supérieur à E₁ pendant une durée minimale donnée, 3 secondes par exemple, l'énergie totale engendrée dans chaque cylindre est jugée suffisante pour qu'un signal de fin de postchauffage alterné puisse être produit, qui interrompt la production des ordres actifs P et Q, avant l'écoulement du temps (3 minutes) normalement affecté à ce postchauffage et pour autant que la température de l'eau de la culasse n'a pas, de son côté, atteint un seuil donné. Dans les deux cas, le dernier diagramme de la figure 3 représente à l'instant t₆, l'ordre d'arrêt du postchauffage alterné.

Selon la figure 2 à nouveau, un deuxième logiciel 66, dit de Correction d'Injection, est associé au microprocesseur 60. Le logiciel 66 a pour fonction de faire élaborer par le microprocesseur 60, à partir des signaux B,C,E, des corrections à appliquer aux instants d'injection de gazole (C.I.I.), qui sont directement déterminées par la pompe d'injection 12 ou indirectement par le levier de commande d'injection, associée à la pédale d'accélération 31.

A partir des signaux B et C (températures de l'eau et de l'air), le logiciel 66 fait produire par le microprocesseur 60 et l'interface 70, un ordre actif R appliqué à l'électrovanne 44 de Correction de l'Instant d'Injection, normalement établi par le calculateur mécanique que comporte la pompe 12.

Cette correction correspond à une avance angulaire préréglée de valeur donnée que prend l'organe de la pompe 12 qui détermine automatiquement les instants d'injection du gazole dans les différents cylindres. La durée de cet ordre R est déterminée par le microprocesseur 60 opérant sous le contrôle du logiciel 66, de la manière exposée ci-après.

En fonction des températures Θeau et Θeau, en accord avec deux lois expérimentales numérisées et mémorisées dans le logiciel 66 (leur représentation analogique est donnée à la figure 4 avec, dans le cas présent t_{M}=0,5 à 3 minutes et tₘ=2 à 3 secondes), le logiciel 66 calcule par interpolation entre la douzaine de points mémorisés pour chaque loi, les durées approchées de l'ordre R qui ressortent de ces deux lois puis il les combine suivant une relation linéaire qui privilégie Θeau.

Grâce à cette opération, dite de surcalage, le fonctionnement du moteur est amélioré d'une première façon pendant sa phase de démarrage.

A partir des signaux B et C, le logiciel 66 fait produire par le microprocesseur 60 et l'interface 70, un ordre S à l'intention de l'électrovanne 46 de Correction d'Avance d'Injection (C.A.I.), associée à la pompe 12. Sous l'action de l'électrovanne 46, le calculateur mécanique de la pompe 12 accroît d'une faible valeur donnée l'instant d'injection de manière similaire à l'électrovanne 44 mais dont la durée d'activation S est calculée différemment.

La durée de l'ordre S, élaborée par le microprocesseur 60 sous le contrôle du logiciel 66 est variable en fonction des températures de l'air et de l'eau. La loi de cette variation est représentée à la figure 5. L'ordre S est actif lorsque l'une ou l'autre des deux conditions suivantes est établie : la température de l'air est inférieure à 0°C ou celle de l'eau est supérieure à 60°C, ces deux valeurs données à titre indicatif pouvant varier quelque peu. L'ordre S est passif dans le cas contraire.

Grâce à cette opération, appelée ALFB par les professionnels du moteur Diesel, le fonctionnement du moteur est amélioré d'une deuxième façon pendant sa phase de démarrage.

A partir des signaux de température B et C, le microprocesseur 60, sous le contrôle du logiciel 66, élabore un signal que l'interface 70, transforme en un ordre T, adressé à l'électrovanne 48, associée au levier de commande d'injection lié à la pédale d'accélérateur 31. Sous l'action de l'électrovanne 48, les quantités de gazole normalement injectées dans les cylindres, lorsque la pédale d'accélérateur 31 n'est pas actionnée (ce qui correspond au ralenti du moteur) sont automatiquement augmentées d'une valeur donnée (ce que fait manuellement le conducteur lorsqu'il dispose d'un "starter"). La durée de l'ordre T est déterminée par le microprocesseur 60 sous le contrôle du logiciel 66, en fonction d'une loi expérimentale numérisée et mémorisée dans le logiciel 66, (la représentation analogique de cette loi est donnée à la figure 4, avec, dans le cas présent t_{M}=30 à 40 secondes et tₘ=1 seconde). A partir d'une douzaine de points mémorisés dans le logiciel 66, le microprocesseur 60 calcule, par interpolation, la durée de l'ordre T.

Grâce à cette opération, dite de ralenti accéléré, le fonctionnement du moteur Diesel est amélioré d'une troisième façon pendant sa phase de démarrage.

Selon la figure 2, le dispositif d'optimisation du fonctionnement d'un moteur Diesel selon l'invention comporte un troisième logiciel 68 dont la fonction est de contrôler la recirculation des gaz d'échappement du moteur de manière à réduire la production d'oxydes d'azote et par là, être en conformité avec les normes antipollution applicables.

A partir des signaux B et C de température d'eau et d'air et des signaux D, de régime du moteur, et E de charge des cylindres, le microprocesseur 60 sous le contrôle du logiciel 68 élabore un signal de recirculation que l'interface 70 transforme en un ordre V, appliqué au module 54 de commande de l'asservissement de la vanne pneumatique 52, disposée en déviation sur le tuyau d'échappement 50 du moteur 10 et raccordée au collecteur 16 d'admission d'air du moteur. L'ordre V, qui est appliqué au module 54, est une série d'impulsions à fréquence constante (150 Hz environ) et à rapport cyclique variable. Le module 54 comporte une électrovanne raccordée à une pompe à dépression. Il transforme ce rapport cyclique variable en une différence de pressions directement proportionnelle. Cette différence de pressions est ensuite appliquée en signal d'entrée à un dispositif pneumatique d'asservissement, associé à la vanne 52 et adapté à faire prendre à cette vanne une ouverture proportionnelle au signal d'entrée. La description ci-dessus est donnée à titre indicatif et l'ensemble, formé par le module 54 et la vanne 52, peut être remplacé par tout autre dispositif particulier équivalent.

Grâce à cette disposition, les gaz d'échappement du moteur sont aspirés dans les cylindres en même temps que l'air extérieur. La proportion des volumes de gaz brûlés et d'air frais respectivement aspirés est directement dépendante du rapport de la section d'ouverture de la vanne 52 branchée sur le tuyau d'échappement 50 et de celle du collecteur d'admission d'air 16.

L'ordre V élaboré par le microprocesseur 60 sous le contrôle du logiciel 68 est, à titre principal, calculé à partir d'une cartographie de lois expérimentales, numérisées et mémorisées dans le logiciel 68, dans laquelle les signaux D (régime du moteur) et E (charge des cylindres) sont les paramètres d'entrée, puis, à titre complémentaire, corrigé à partir des températures d'air et d'eau (signaux B et C) et du gradient de vitesse du moteur.

La cartographie visée ci-dessus comprend, par exemple, 15 points de charge et 10 points de régime, c'est-à-dire 150 valeurs de proportions de gaz brûlés à recirculer dans le cylindre. Ces valeurs vont de 0 à 50 % environ. La figure 6 illustre une partie de cette cartographie : au-dessus de la ligne brisée représentée, tout point particulier (tel J ayant pour coordonnées : charge de rang 9 et régime de rang 6) correspond à un coefficient de recirculation nulle. Sur cette même ligne brisée, et en-dessous de cette ligne, les points mémorisés (tels K,L,M) correspondent à des coefficients particuliers de recirculation des gaz brûlés, respectivement égaux à 10,20 et 30 %, pour les trois points représentés.

Pour des valeurs de régime et de charge tombant hors des points mémorisés, des interpolations sont effectuées par le microprocesseur 60 à partir de valeurs des quatre valeurs fournies par les quatre coins du carré (ou du rectangle si les points ne sont pas équidistants) dans lequel tombe la valeur en question.

Lorsque le coefficient de recirculation des gaz brûlés a ainsi été calculé à titre principal, ce coefficient est corrigé par un facteur k, en fonction des températures d'eau et d'air. Les lois de correction sont des lois expérimentales numérisées et mémorisées dans le logiciel 68. Leur représentation analogique est fournie par la figure 5.

A titre indicatif, chacune des valeurs des facteurs kₑₐᵤ et kₐᵢᵣ passe de 0,10 à 1 lorsque les températures de l'air et de l'eau passent de - 30 à + 80°C. Comme précédemment, pour obtenir le facteur k à utiliser, les deux valeurs kₑₐᵤ et kₐᵢᵣ ainsi fournies à partir de Θeau et Θair sont combinées selon une relation linéaire déterminée expérimentalement qui privilégie kₑₐᵤ.

Lorsque le coefficient de recirculation des gaz brûlés a ainsi été calculé et corrigé et que l'ouverture de la vanne 52 a été asservie à la valeur de ce coefficient, la proportion de gaz brûlés recirculés dans le cylindre permet, en régime stable ou lentement variable, de constamment éviter une augmentation trop grande de la température instantanée dans le cylindre au moment de l'explosion du mélange gazole - air - gaz brûlés en donnant correctement le volume relatif de ces gaz.

Ceci a pour conséquence de réduire au minimum la quantité d'oxydes d'azote produits du fait de la réduction optimale concomitante de la quantité d'oxygène disponible.

Lorsque le régime du moteur change brusquement, un tel résultat n'est plus vrai. C'est pourquoi, le logiciel 68 comporte un programme complémentaire qui a pour fonctions de calculer à tout moment le gradient de vitesse, à partir du signal D fourni par le capteur 28 et le convertisseur 34b, puis de déterminer, à partir de ce gradient et d'une loi expérimentale numérisée et mémorisée, un facteur de correction multiplicatif m à appliquer au coefficient de recirculation des gaz brûlés précédemment calculé et corrigé comme indiqué ci-dessus. Ce facteur m passe de la valeur 1 pour un gradient de vitesse nul ou négatif à une valeur égale à 1,2 environ pour un gradient de vitesse positif maximal. Ce qui a pour effet de minimiser les conséquences d'une longue accélération sur la production d'oxydes d'azote.

L'invention n'est pas limitée aux formes de réalisation décrites ci-dessus. Elle s'applique à tous moteurs Diesel, quels que soient le nombre de leurs cylindres et leur puissance. Les lois de variation des paramètres et leurs valeurs particulières sont bien entendu directement dépendants de chaque type de moteur concerné.

## Revendications

1. Dispositif d'optimisation du fonctionnement d'un moteur Diesel (10) équipé d'une pompe (12) d'injection distributrice de gazole, caractérisé en ce qu'il comprend :
- deux sondes de température (18,14) de type analogique, respectivement adaptées à mesurer la température de l'eau Θeau dans la culasse (20) et celle de l'air Θair dans le collecteur d'admission (16) ;
- au moins un convertisseur analogique-numérique (34a) relié auxdites sondes, pour produire deux signaux numériques (B) et (C), représentatifs desdites températures Θeau et Θair;
- un microprocesseur (60), opérant sous le contrôle d'un premier logiciel (64), dit de chauffage, pour élaborer à partir des signaux d'entrée Θeau (B) et Θair (C), des signaux de sortie (P-Q) représentatifs des commandes à appliquer aux relais d'alimentation des filaments des bougies (42) de chauffage des cylindres (40) du moteur (10) et de celui d'une lampe-témoin (72) ;
- des étages interfaces (58,70) respectivement disposés en amont et en aval du microprocesseur (60) ;
- ledit logiciel de chauffage (64) étant adapté à faire délivrer par le microprocesseur (60), à partir du moment où la clé de contact est en place et allume le tableau de bord, des signaux de commande d'actuateurs établissant les situations suivantes :
- les filaments des bougies (42a,b,c,d) de tous les cylindres (40a,b,c,d) sont alimentés et une lampe-témoin (72) est allumée, pendant une période dite de préchauffage et la durée D₁ de cette période est, à titre principal, une fonction de la température de l'eau Θeau, ladite fonction prenant une valeur sensiblement constante et voisine d'un maximum lorsque Θeau est inférieur à un premier seuil principal de chauffage Θ₁, puis régulièrement décroissante jusqu'à un minimum quand Θeau passe de Θ₁ à un deuxième seuil principal de chauffage Θ₂ et finalement sensiblement égale à ce minimum au-delà de Θ₂ ;
- les durées de la période de préchauffage D₁ sont, à titre complémentaire, corrigées selon deux fonctions linéaires des écarts de la température de l'air Θair par rapport à deux seuils complémentaires de chauffage successifs Θ₃ et Θ₄, cette correction étant une augmentation de durée en-deçà de Θ3 et une diminution au-delà de Θ₄ ;
- les filaments des bougies (42) continuent à être alimentés de la même façon après la fin de la période de préchauffage, pendant une durée maximale donnée D₂, dite de distraction, comptée à partir de la fin de la période de préchauffage et se terminant à la fin de l'actionnement du démarreur, puis pendant une durée donnée D₃, dite de postchauffage, comptée à partir de l'instant d'actionnement du démarreur (62).

2. Dispositif d'optimisation du fonctionnement d'un moteur Diesel selon la revendication 1, caractérisé en ce qu'il comprend :
- un potentiomètre (32) lié au levier de commande (31) de la pompe (12) d'injection du moteur (10), produisant un signal analogique, ensuite converti en signal numérique α, représentatif de l'énergie unitaire engendrée à la suite de chaque injection dans chacun des cylindres (40a,b,c,d) ;
- un deuxième logiciel dit de postchauffage alterné (64), adapté à faire élaborer par le microprocesseur (10), des signaux de commande desdits relais d'alimentation aboutissant aux situations suivantes :
- pendant plusieurs minutes après la fin du postchauffage, les filaments des bougies d'un premier groupe (42a-42c) et d'un second groupe (42b-42d) sont alternativement (P-Q) alimentés à une fréquence de l'ordre d'un demi-Hertz ;
- dès que le signal numérique α est supérieur à une valeur de seuil α₁, pendant une durée donnée généralement inférieure à dix secondes, ou dès que le signal Θeau dépasse un seuil Θ₅, ce postchauffage alterné est interrompu.

3. Dispositif d'optimisation du fonctionnement d'un moteur Diesel selon la revendication 2, caractérisé en ce qu'il comprend un troisième logiciel dit de surcalage (66) adapté à faire élaborer par le microprocesseur un signal de commande des actuateurs concernés, aboutissant à la situation suivante :
- un premier actuateur (44) associé à la pompe d'injection (12) provoque un avancement déterminé de l'instant d'injection du gazole pendant une durée sensiblement constante, au plus égale à quelques dizaines de secondes, lorsque les températures de l'eau et de l'air sont toutes deux respectivement inférieures à deux premiers seuils de surcalage, ladite durée étant reliée auxdites températures par une combinaison de deux relations sensiblement linéaires décroissantes lorsqu'elles sont respectivement comprises entre lesdits premiers seuils et des deuxièmes seuils de surcalage, puis sensiblement constante et au moins égale à quelques secondes, lorsqu'elles sont toutes deux supérieures auxdits deuxièmes seuils.

4. Dispositif d'optimisation du fonctionnement d'un moteur Diesel selon la revendication 3, caractérisé en ce qu'il comprend un quatrième logiciel dit d'avance faible charge (66) qui permet d'aboutir à la situation suivante :
- dès la mise sous tension du démarreur (22) du moteur (10), une électrovanne (46) associée à la pompe d'injection (12), tout d'abord provoque une augmentation déterminée de l'avance à l'injection dans les cylindres (40) du moteur, lorsque la température de l'air Θair est inférieure à un seuil donné et ensuite maintient cette augmentation aussi longtemps que la température de l'eau Θeau n'a pas atteint un autre seuil donné.

5. Dispositif d'optimisation du fonctionnement d'un moteur Diesel selon l'une des revendication précédentes, caractérisé en ce qu'il comprend : un capteur (26-28) de vitesse instantanée de rotation, associé au volant d'inertie (24) du moteur (10), pour fournir un signal numérique représentatif de ladite vitesse, une vanne (52) à ouverture asservie à une valeur-pilote (V) est disposée entre les conduits d'échappement (50) et d'admission (16) du moteur (10) et un cinquième logiciel (68), dit de recirculation, est associé au microprocesseur (10), ledit logiciel de recirculation étant adapté à faire élaborer par le microprocesseur (10) un signal de commande des actuateurs concernés aboutissant à la situation suivante :
- ladite valeur-pilote (V) est à tout moment principalement déterminée par la valeur (D) de la vitesse instantanée de rotation du moteur (10) et par celle de l'énergie unitaire engendrée dans les cylindres (40) représentée par la position du potentiomètre (32) associé au levier de commande (31) de la pompe d'injection (12) en accord avec une cartographie des principales valeurs-pilotes en fonction des deux paramètres en question.

6. Dispositif d'optimisation du fonctionnement d'un moteur Diesel selon la revendication 5, caractérisé en ce que ledit logiciel de recirculation (68) est en outre adapté à moduler ladite valeur-pilote (V) fournie par ladite cartographie, selon une fonction sensiblement linéaire de la température de l'eau (B), le facteur de modulation étant de l'ordre de 0,10 lorsque la température de l'eau (B) est minimale; et égal à l'unité lorsqu'elle atteint sa plage de consigne.

7. Dispositif d'optimisation du fonctionnement d'un moteur Diesel selon la revendication 6, caractérisé en ce que le logiciel de recirculation (68) est de plus adapté à faire progressivement varier ladite valeur-pilote (V) entre deux valeurs successives fournies par la cartographie, en accord avec le gradient de la vitesse de rotation (D) du moteur (10).

## Patentansprüche

1. Vorrichtung zur Optimierung des Betriebs einer mit einer Kraftstoffeinspritzpumpe (12) versehenen Dieselbrennkraftmaschine (10), gekennzeichnet durch
- zwei Temperaturfühler (18, 14) analoger Bauart, die dergestalt ausgebildet sind, daß sie jeweils die Temperatur θeau des Wassers im Zylinderkopf (20) und die Temperatur θair der Luft in dem Ansaugsammelrohr (16) messen;
- zumindest einen mit den Fühlern verbundenen Analog-Digital-Umsetzer (34a) zum Erzeugen zweier digitaler, die vorstehend genannten Temperaturen θeau und θair repräsentierender Signale (B) und (C);
- einen durch ein erstes Programms (64) zum Vorwärmen gesteuerten Mikroprozessor (60) zum Erzeugen von den Versorgungsrelais der Glühdrähte der Glühkerzen (42) der Zylinder (40) der Brennkraftmaschine (10) und dem Versorgungsrelais einer Kontrolleuchte (72) zuzuführenden, Anweisungen repräsentierenden Ausgangssignalen (P-Q) aus den Eingangssignalen θeau (B) und θair (C);
- Schnittstellenstufen (58, 70), die eingangsseitig bzw. ausgangsseitig des Mikroprozessors (60) angeordnet sind;
- wobei das Vorwärmprogramm (64) dergestalt ausgebildet ist, daß es den Mikroprozessor (60) von dem Zeitpunkt an, zu dem der Zündschlüssel eingeführt und die Instrumententafel eingeschaltet wird, Aktuator-Steuersignale abgeben läßt, die zu den nachstehenden Situationen führen:
- während einer sogenannten Vorwärmperiode werden die Glühdrähte der Glühkerzen (42 a,b,c,d) aller Zylinder (40 a,b,c,d) versorgt und eine Kontrolleuchte (72) eingeschaltet, und die Dauer D₁ dieser Periode ist im Grundsatz eine Funktion der Wassertemperatur θeau, wobei die vorstehend genannte Funktion einen im wesentlichen konstanten und in der Nähe eines Maximums liegenden Wert annimmt, wenn die Temperatur θeau kleiner ist als ein erster Vorwärm-Hauptschwellenwert θ₁, dann stetig bis auf ein Minimum abnimmt, wenn θeau von θ₁ auf einen zweiten Vorwärm-Hauptschwellenwert θ₂ übergeht, und jenseits von θ₂ schließlich im wesentlichen gleich diesem Minimum ist;
- die Dauern der Vorwärmperiode D₁ werden zusätzlich in Übereinstimmung mit zwei linearen Funktionen der Abstände der Temperatur θair der Luft bezogen auf zwei zusätzliche Vorwärm-Schwellenwerte θ₃ und θ₄ korrigiert, wobei diese Korrektur in einer Verlängerung der Dauer unterhalb von θ₃ und einer Verkürzung oberhalb von θ₄ besteht;
- die Glühdrähte der Glühkerzen (42) werden nach dem Ende der Vorwärmdauer beginnend mit dem Ende der Vorwärmdauer und endend mit dem Ende der Betätigung des Anlassers für eine vorbestimmte maximale Streudauer D₂ und dann beginnend mit dem Zeitpunkt der Betätigung des Anlassers (62) während einer vorbestimmten Nachwärmdauer D₃ fortgesetzt auf dieselbe Art und Weise versorgt.

2. Vorrichtung zur Optimierung des Betriebs einer Dieselbrennkraftmaschine nach Anspruch 1, gekennzeichnet durch
- ein mit dem Steuerhebel (31) der Einspritzpumpe (12) der Brennkraftmaschine (10) verbundenes Potentiometer (32), welches ein analoges Signal erzeugt, das sodann in ein die im Anschluß an jeden Einspritzvorgang in jeden der Zylinder (40 a,b,c,d) erzeugte Einheitsenergie repräsentierendes digitales Signal α konvertiert wird;
- ein zweites Programm (64) zum alternierenden Nachwärmen, welches dergestalt ausgebildet ist, daß es den der Mikroprozessor (10) Steuersignale für die Versorgungsrelais erzeugen läßt, die zu den nachstehenden Situationen führen:
- während mehrerer Minuten nach dem Ende des Nachwärmens werden die Glühdrähte der Glühkerzen einer ersten Gruppe (42a-42c) und einer zweiten Gruppe (42b-42d) abwechselnd (P-Q) mit einer Frequenz von etwa einem halben Hertz versorgt;
- sobald das digitale Signal α innerhalb einer vorbestimmten Zeitdauer von vorwiegend weniger als zehn Sekunden größer ist als ein Schwellenwert α₁, oder sobald das Signal θeau einen Schwellenwert θ₅ überschreitet, wird dieses alternierende Nachwärmen unterbrochen.

3. Vorrichtung zur Optimierung des Betriebs einer Dieselbrennkraftmaschine nach Anspruch 2, gekennzeichnet durch ein drittes Programm (66) zur Feineinstellung, welches dergestalt ausgebildet ist, daß es den Mikroprozessor ein Steuersignal für die betroffenen Aktuatoren erzeugen läßt, welches zu der nachstehenden Situation führt:
- ein mit der Einspritzpumpe (12) verbundener erster Aktuator (44) während einer im wesentlichen konstanten Zeitdauer, die zumindest einige zehn Sekunden beträgt, eine bestimmte Voreilung des Kraftstoff-Einspritzzeitpunkts, wenn die Wasser- und Lufttemperaturen beide jeweils kleiner sind als zwei erste Feineinstellungs-Schwellenwerte, wobei diese Zeitdauer über eine Verknüpfung zweier in dem Bereich zwischen dem ersten und dem zweiten Feineinstellungs-Schwellenwert im wesentlichen linear abnehmend verlaufender Zusammenhänge mit den Temperaturen gekoppelt ist, und dann im wesentlichen konstant und zumindest gleich einigen Sekunden ist, wenn beide Temperaturen größer sind als die vorgenannten beiden Schwellenwerte.

4. Vorrichtung zur Optimierung des Betriebs einer Dieselbrennkraftmaschine nach Anspruch 3, gekennzeichnet durch ein viertes Programm (66) zur schwachen Vorladung, welches das Erreichen der nachstehenden Situation erlaubt:
- ab dem Anlegen von Spannung an den Anlasser (22) der Brennkraftmaschine (10) bewirkt ein mit der Einspritzpumpe (12) verbundenes Elektroventil (46) zunächst eine bestimmte Zunahme der Voreilung des Einspritzvorgangs in die Zylinder (40) der Brennkraftmaschine, wenn die Lufttemperatur θair kleiner ist als ein vorbestimmter Schwellenwert, und behält diese Zunahme so lange bei, wie die Wassertemperatur θeau einen anderen vorbestimmten Schwellenwert nicht erreicht hat.

5. Vorrichtung zur Optimierung des Betriebs einer Dieselbrennkraftmaschine nach einem der vorangehenden Ansprüche, gekennzeichnet durch einen dem Schwungrad (24) der Brennkraftmaschine (10) zugeordneten Momentandrehzahl-Aufnehmer (26-28), der ein digitales, die Drehzahl repräsentierendes Signal abgibt, ein zwischen den Auspuff- (50) und den Ansaugrohren (16) der Brennkraftmaschine (10) angeordnetes, von einem Führungswert (V) abhängiges Öffnungsventil (52), und ein dem Mikroprozessor (10) zugeordnetes fünftes Programm (68) zur Abgasrückführung, wobei das Abgasrückführprogramm dergestalt ausgebildet ist, daß es den Mikroprozessor (10) ein Steuersignal für die betroffenen Aktuatoren erzeugen läßt, welches zu der nachstehenden Situation führt:
- der Führungswert (V) ist in jedem Moment im wesentlichen durch den Wert (D) der Momentandrehzahl der Brennkraftmaschine (10) sowie durch die in den Zylindern (40) erzeugte und durch die Position des mit dem Steuerhebel (31) der Einspritzpumpe (12) verbundenen Potentiometers (32) repräsentierte Einheitsenergie in Übereinstimmung mit einer Kartographie der Hauptführungswerte in Abhängigkeit von den beiden gesuchten Parametern bestimmt.

6. Vorrichtung zur Optimierung des Betriebs einer Dieselbrennkraftmaschine nach Anspruch 5, dadurch gekennzeichnet, daß das Abgasrückführprogramm (68) außerdem den durch die Kartographie bereitgestellten Führungswert (V) gemäß einer im wesentlichen linearen Funktion der Temperatur des Wassers (B) moduliert, wobei der Modulationsfaktor bei der kleinsten Wassertemperatur (B) etwa 0,10 beträgt und gleich eins ist, wenn diese ihren Sollbereich erreicht.

7. Vorrichtung zur Optimierung des Betriebs einer Dieselbrennkraftmaschine nach Anspruch 6, dadurch gekennzeichnet, daß das Abgasrückführprogramm (68) darüber hinaus den Führungswert (V) zwischen zwei durch die Kartographie bereitgestellten aufeinanderfolgenden Werten in Übereinstimmung mit dem Gradienten der Drehzahl (D) der Brennkraftmaschine (10) progressiv verändert.

## Claims

1. An arrangement for optimising the functioning of a diesel engine (10) fitted with a diesel-distributing injection pump (12), characterised in that it comprises:
- two temperature probes (18, 14) of analog type which are respectively adapted to measure the temperature of the water θwater in the cylinder head (20) and the temperature of the air θair in the intake manifold (16);
- at least one analog-digital converter (34a) connected to said probes to produce two digital signals (B) and (C) representative of said temperatures θwater and θair;
- a microprocessor (60) operating under the control of a first software (64) referred to as heating software for producing from the input signals θwater (B) and θair (C) output signals (P-Q) representative of the commands to be applied to the relays for powering the elements of the plugs (42) for heating the cylinders (40) of the engine (10) and that of a warning lamp (72);
- interface stages (58, 70) respectively disposed upstream and downstream of the microprocessor (60);
- said heating software (64) being adapted to cause the microprocessor (60) to deliver, as from the moment at which the ignition key is in position and lights the dashboard, signals for controlling actuators for establishing the following situations:
- the elements of the plugs (42a, b, c, d) of all the cylinders (40a, b, c, d) are powered and a warning lamp (72) is lit for a period referred to as the preheating period and the duration D₁ of that period is mainly a function of the temperature of the water θwater, said function assuming a value which is substantially constant and close to a maximum when θwater is lower than a first main heating threshold θ₁, then regularly decreasing to a minimum when θwater goes from θ₁ to a second main heating threshold θ₂ and is finally substantially equal to said minimum beyond θ₂;
- the durations of the preheating period D₁ are complementarily corrected in accordance with two linear functions in respect of the differences of the temperature of the air θair with respect to two successive complementary heating thresholds θ₃ and θ₄, said correction being an increase in duration short of θ₃ and a reduction beyond θ₄; and
- the elements of the plugs (42) continue to be powered in the same manner after the end of the preheating period for a maximum given duration D₂ which is referred to as the distraction duration and counted from the end of the preheating period and concluding at the end of actuation of the starter and then for a given period D₃ referred to as the postheating period counted from the time of actuation of the starter (62).

2. An arrangement for optimising the functioning of a diesel engine in accordance with claim 1 characterised in that it comprises:
- a potentiometer (32) connected to the control lever (31) of the injection pump (12) of the engine (10), producing an analog signal which is then converted into a digital signal or representative of the unitary energy generated following each injection into each of the cylinders (40a, b, c, d);
- a second software referred to as the alternate postheating software (64) which is adapted to cause the microprocessor (10) to produce signals for controlling said power supply relays, resulting in the following situations:
- for several minutes after the end of the postheating phase the elements of the plugs of a first group (42a-42c) and a second group (42b-42d) are alternatively (P-Q) supplied with power at a frequency of the order of half a Hertz;
- as soon as the digital signal α is higher than a threshold value α₁ for a given period which is generally less than ten seconds or as soon as the signal θwater exceeds a threshold θ₅ said alternate postheating is interrupted.

3. An arrangement for optimising the functioning of a diesel engine according to claim 2 characterised in that it comprises a third software referred to as over adjustment software (66) which is adapted to cause the microprocessor to produce a signal for control of the actuators involved, resulting in the following situation:
- a first actuator (44) associated with the injection pump (12) causes a given advance of the moment of injection of the diesel for a substantially constant duration which is at least equal to some tens of seconds when the temperatures of the water and the air are both respectively lower than two first overadjustment thresholds, said duration being related to said temperatures by a combination of two substantially linear relationships which are decreasing when they are respectively between said first thresholds and the second over adjustment thresholds and then being substantially constant and at least equal to a few seconds when they are both higher than said second thresholds.

4. An arrangement for optimising the functioning of a diesel engine according to claim 3 characterised in that it comprises a fourth software referred to as the low-load advance software (66) which makes it possible to arrive at the following situation:
- as soon as voltage is applied to the starter (22) of the engine (10) an electrically operated valve (46) associated with the injection pump (12) firstly causes a given increase in the advance upon injection into the cylinders (40) of the engine when the temperature of the air θair is lower than a given threshold and then maintains that increase as long as the temperature of the water θwater has not reached another given threshold.

5. An arrangement for optimising the functioning of a diesel engine according to one of the preceding claims characterised in that it comprises: a sensor (26-28) for sensing the instantaneous speed of rotation which is associated with the flywheel (24) of the engine (10) to produce a digital signal representative of said speed, an opening-type valve (52) under the control of a pilot value (V) is disposed between the exhaust (50) and intake (16) ducts of the engine (10) and a fifth software (68) referred to as the recirculation software is associated with the microprocessor (10), said recirculation software being adapted to cause the microprocessor (10) to produce a signal for control of the actuators in question, resulting in the following situation:
- said pilot value (V) is at any moment mainly determined by the value (D) of the instantaneous speed of rotation of the engine (10) and by that of the unitary energy generated in the cylinders (40) and represented by the position of the potentiometer (32) associated with the control lever (31) of the injection pump (12) in accordance with a mapping of the main pilot values in dependence on the two parameters in question.

6. An arrangement for optimising the functioning of a diesel engine according to claim 5 characterised in that said recirculation software (68) is also adapted to modulate said pilot value (V) supplied by said mapping in accordance with a substantially linear function of the temperature of the water (B), the modulation factor being of the order of 0.10 when the temperature of the water (B) is at a minimum; and equal to unity when it attains its reference range.

7. An arrangement for optimising the functioning of a diesel engine according to claim 6 characterised in that the recirculation software (68) is also adapted for progressively varying said pilot value (V) between two successive values supplied by the mapping in accordance with the gradient of the speed of rotation (D) of the engine (10).
